# EUROPÄISCHE PATENTSCHRIFT

(11) **EP 1 108 191 B1**
(45) Veröffentlichungstag und Bekanntmachung des Hinweises auf die Patenterteilung: **05.06.2002**
(21) Anmeldenummer: 99967837.8
(22) Anmeldetag: 06.08.1999
(51) Int. Cl.: F24J 2/52

(54) **ANLAGE ZUR SOLARTHERMISCHEN ENERGIEGEWINNUNG**
INSTALLATION FOR PRODUCING SOLAR THERMAL ENERGY
INSTALLATION DE PRODUCTION D'ENERGIE THERMIQUE SOLAIRE

(30) Priorität: 25.08.1998 DE 19838481
(43) Veröffentlichungstag der Anmeldung: 20.06.2001
(73) Patentinhaber: WITT, Michael T., D-76275 Ettlingen (DE)
(72) Erfinder: WITT, Michael, T., D-76275 Ettlingen (DE); WITT, Ilse, D-76275 Ettlingen (DE); WITT, Janine, D-76275 Ettlingen (DE)
(74) Vertreter: Durm, Frank, Dipl.-Ing.
(86) Internationale Anmeldenummer: EP9905687
(87) Internationale Veröffentlichungsnummer: WO0011416

(56) Entgegenhaltungen:
- DE-A- 2 543 687
- DE-A- 2 657 244
- FR-A- 2 315 067
- US-A- 4 159 736
- US-A- 4 470 403

## Beschreibung

Die Erfindung betrifft eine Anlage zur solarthermischen Energiegewinnung, mit einer Absorberschicht zur Umwandlung von Sonnenlicht in thermische Energie sowie mit einer transparenten, wärmetragenden Flüssigkeit zum Transport der in der Absorberschicht erzeugten Wärme zur weiteren Nutzung, wobei die Absorberschicht innerhalb der wärmetragenden Flüssigkeit angeordnet ist.

Anlagen zur solarthermischen Energiegewinnung sind in verschiedenen Ausgestaltungen bekannt. Als Beispiele sind Solarturmkraftwerke oder Parabolrinnenkraftwerke zu nennen, in welchen Solarenergie durch thermische Umwandlung in großtechnischem Maßstab nutzbar gemacht wird. Solche Kraftwerke haben allerdings einen sehr hohen Flächenbedarf, und sie sind außerdem auf den Einsatz in Breiten beschränkt, in welchen eine hohe direkte Sonneneinstrahlung gewährleistet ist, da sie den diffusen Anteil des Sonnenlichts kaum nutzen können.

Im kleineren Maßstab sind Anlagen zur solarthermischen Energiegewinnung als Sonnenkollektoren zur Warmwasserbereitung in Haushalten bekannt, welche vorzugsweise auf Hausdächern installiert werden. Eine solche dezentrale Nutzung der Solarenergie dient allerdings eher der Einsparung von Energiekosten in Privathaushalten, denn der Ersetzung von fossilen Energieträgern als Primärenergiequelle.

Ein schwimmendes Solarkraftwerk zur großtechnischen Gewinnung von Elektrizität ist in der DE 25 43 687 C2 beschrieben. Die Flächen des Solarkraftwerks sind als Absorber ausgebildet und werden der Sonne nachgeführt. Die Absorber sind dabei auf einer schwimmenden, als Kreisscheibe mit sehr großem Durchmesser ausgebildeten Kollektorplattform angeordnet, die aus einem flexiblen, betriebsmäßig nur Zugspannungen aufnehmenden Werkstoff besteht. Die auf dem Wasser schwimmende Kollektorplattform ist mit Einrichtungen versehen, welche die Plattform auf dem Wasser drehen können.

In der DE 28 19 946 A1 ist ein Wärmespeicherteich und eine Energieerzeugungsanlage unter Verwendung eines derartigen Wärmespeicherteichs beschrieben. Der Wärmespeicherteich enthält eine Wärmespeicherflüssigkeit, auf der eine isolierende Schicht schwimmt. Diese ist dick genug, um die Wärmespeicherflüssigkeit thermisch zu isolieren. Die Energieerzeugungsanlage umfaßt einen derartigen Wärmespeicherteich. Weiterhin ist eine Wärmekraftmaschine zum Extrahieren von Wärme aus der Wärmespeicherflüssigkeit vorgesehen.

Ein Sonnenkollektor mit einem Absorber, der innerhalb einer transparenten wärmetragenden Flüssigkeit angeordnet ist, ist aus dem Gebrauchsmuster DE 296 03 275 U1 bekannt. Diese spezielle Anordnung des Absorbers soll die Wärmeverluste beim Wärmeübergang vom Absorber zur wärmetragenden Flüssigkeit minimieren und insbesondere die Abstrahlverluste des Absorbers vermeiden. Der Materialaufwand für diesen bekannten Sonnenkollektor ist jedoch relativ hoch, so daß dessen Einsatz auf die Warmwasserbereitung von Haushalten beschränkt ist.

Ein weiterer Sonnenkollektor ist in FR-A-2 315 067 beschrieben.

Ausgehend von diesem Stand der Technik liegt der Erfindung die Aufgabe zugrunde, eine Anlage zur solarthermischen Energiegewinnung mit dem eingangs beschriebenen Prinzip der Absorberanordnung vorzuschlagen, die ohne Zusatzbefeuerung auch in großtechnischem Maßstab auf wirtschaftliche Weise solare Energie durch thermische Umwandlung nutzbar macht.
Diese Aufgabe wird durch eine Anlage mit den Merkmalen des beigefügten Anspruchs 1 gelöst.

Vorteilhafte Ausgestaltungen und Weiterbildungen der Erfindung ergeben sich aus den Ansprüchen 2 bis 19.

Kernstück der erfindungsgemäßen Anlage ist mindestens ein Heißwasserspeicher, in dem mit Hilfe einer darin angeordneten Absorberschicht aus der Sonnenstrahlung heißes Wasser mit einer Temperatur von typischerweise um die 100° C erzeugt und gleichzeitig gespeichert wird. Dieser Heißwasserspeicher befindet sich schwimmend unter einer Wasseroberfläche. Die erfindungsgemäße Anlage wird also in einem Gewässer, vorzugsweise in einem Meer aufgestellt, so daß keine Landfläche verbraucht wird. Die Umwandlung der Sonnenstrahlung in Wärme erfolgt direkt im Energiespeicher, so daß Energieverluste beim Wärmetransport entfallen. Durch die integrierte Energiespeicherung werden keine fossilen Brennstoffe für die Stunden fehlender Sonneneinstrahlung benötigt.

Zur Reduzierung von Wärmeverlusten an die Umgebung ist der Heißwasserspeicher mit einer Wärmedämmung versehen. An seiner Oberseite ist die Wärmedämmung transparent, um die Sonnenstrahlung zur Absorberschicht durchzulassen.

Aus dem Heißwasserspeicher kann heißes Wasser als wärmetragende Flüssigkeit entnommen werden, mit welchem ohne Zusatzbefeuerung im Mittel- bis Grundlastbereich Strom oder Trinkwasser erzeugt werden kann. Auch eine Wärmeauskopplung beispielsweise zur Fernwärmeversorgung ist möglich.

Ein Vorteil der Erfindung besteht darin, daß der Betrieb der Anlage zur solarthermischen Energiegewinnung auch außerhalb der Sonnenscheinstunden möglich ist, da auch nachts und in Zeiten geringer Sonneneinstrahlung durch eine entsprechende Dimensionierung des Heißwasserspeichers genügend Energie gespeichert sein kann. Je nach Größe der Anlage und Klimazone des Aufstellorts ist ein wirtschaftlicher Betrieb für Mittel- bis Grundlast möglich.

Im Gegensatz zu den bekannten Parabolrinnenkraftwerken vermag die erfindungsgemäße Anlage neben paralleler Sonnenstrahlung auch den diffusen Anteil zu nutzen. Hierdurch ist die Anlage auch in tropischen und gemäßigten Klimazonen einsetzbar, was den möglichen Einsatzbereich enorm vergrößert.

Das erfindungsgemäße Konzept, die im Absorber erzeugte Wärme direkt an den Inhalt des Heißwasserspeichers abzugeben und die wärmetragende Flüssigkeit zur weiteren Nutzung aus dem Heißwasserspeicher zu entnehmen, ist insbesondere wegen der schwimmenden Ausbildung des Heißwasserspeichers in großtechnischem Maßstab nutzbar: Der Heißwasserspeicher kann ohne weiteres in Dimensionen realisiert werden, die eine effiziente Energiespeicherung gewährleisten.

Eine volumenveränderliche Ausbildung des Heißwasserspeichers bietet weitere Vorteile: Je nach Intensität der Sonneneinstrahlung kann der Speicherinhalt verändert werden. Ist die eingestrahlte Energiemenge groß, kann der Heißwasserspeicher durch Zugabe von kälterem Wasser vergrößert werden, wobei das kältere Wasser nach und nach auf die Speichertemperatur erhitzt wird - es geht keine überschüssige Energie verloren. Bei Betrieb der Anlage ohne Sonneneinstrahlung (in der Nacht) wird Heißwasser aus dem Speicher entnommen, während das Volumen des Speichers verringert wird. Dadurch muß kein kälteres Wasser in den Heißwasserspeicher nachfließen, so daß die Speichertemperatur auch bei Nachtbetrieb der Anlage unverändert hoch bleiben kann.

Vorteilhaft ist es dabei, wenn der Heißwasserspeicher mit membranartig beweglichen Wänden versehen ist. Dies spart nicht nur Material ein, sondern vermeidet auch statische Schwierigkeiten und Stabilitätsprobleme mit der Speicherwand. Schließlich können dadurch in gewissem Maß Wasserbewegungen aufgefangen werden, ohne Schäden an den Speicherwänden zu riskieren.

Da die meisten Prozesse zur Nutzung der aus dem Heißwasserspeicher entnommenen Wärme das heiße Wasser nicht bis auf Umgebungstemperatur kühlen, ist es vorteilhaft, wenn ein Warmwasserrücklaufspeicher für die zurückfließende wärmetragende Flüssigkeit vorgesehen ist, der an den Heißwasserspeicher angrenzend angeordnet wird. Wenn die Grenzfläche zwischen den beiden Speichern groß genug ist, werden Wärmeverluste aus dem Heißwasserspeicher in die Umgebung deutlich vermindert: Der Wärmeübergang vom Heißwasserspeicher in den Warmwasserrücklaufspeicher erfolgt durch das kleinere Temperaturgefälle langsamer, wobei die in den Warmwasserrücklaufspeicher fließende Wärme für den Nutzungsprozeß dennoch nicht verloren ist.

Zweckmäßigerweise können der Heißwasserspeicher und der Warmwasserrücklaufspeicher als Modul mit gemeinsamen Außenwänden ausgestaltet sein, wobei eine verschiebbare Trennwand die beiden Speicherinhalte voneinander trennt. Die bewegliche Ausbildung dieser Trennwand, die aus einer Wärmedämmung bestehen kann, ermöglicht eine Volumenänderung des Heißwasserspeichers und des Warmwasserrücklaufspeichers, die je nach Sonneneinstrahlung und Betriebssituation Vorteile bietet.

Bevorzugterweise wird eine solche, als Wärmedämmung ausgebildete Trennwand in einem Modul einheitlich mit der Absorberschicht gefertigt, wobei die Dichte des Gesamtgebildes so eingestellt wird, daß sie geringfügig über der Dichte liegt, die der Inhalt des Heißwasserspeichers bei der gewünschten Endtemperatur besitzt. So wird ein Aufschwimmen von Trennwand und Absorberschicht zuverlässig verhindert; das Verschieben der Trennwand kann auf diese Weise sogar selbstregulierend, ohne Eingreifen von außen erfolgen.

Besonders bei flächig ausgebildeten Heißwasserspeichern ist die Verminderung von Wärmeverlusten aus dem Heißwasserspeicher dann besonders ausgeprägt, wenn der Heißwasserspeicher zumindest an seiner Oberseite und seiner Unterseite in den Warmwasserrücklaufspeicher eingebettet ist. Hier kommt noch hinzu, daß ein etwa im oben liegenden Warmwasserrücklaufspeicher absorbierter Anteil der eingestrahlten Sonnenenergie für den Nutzungsprozeß nicht verloren ist, da dieser das Wasser zusätzlich vorerwärmt, bevor es in den Heißwasserspeicher gelangt.

Es kann vorteilhaft sein, wenn der oberhalb des Heißwasserspeichers angeordnete Teil des Warmwasserrücklaufspeichers die Form einer konvexen Linse aufweist - hierdurch kann der parallele Anteil der Sonnenstrahlung in einen bestimmten Bereich des Heißwasserspeichers gebündelt werden, wobei dort sinnvollerweise ein Hochleistungsabsorber angeordnet ist.

Anstatt oder zusätzlich zur Ausbildung des Warmwasserrücklaufspeichers als konvexe Linse können auch Folienspiegel im Heißwasserspeicher vorgesehen sein, die vorzugsweise parabolförmig so um einen bestimmten Bereich des Heißwasserspeichers angeordnet werden, daß sie das einfallende Sonnenlicht auf diesen Bereich bündeln.

Insbesondere wenn der Heißwasserspeicher größtenteils in den Warmwasserrücklaufspeicher eingebettet ist, ist es aus den oben bereits genannten Gründen zweckmäßig, wenn dieser membranartig bewegliche Wände aufweist.

Die in der erfindungsgemäßen Anlage erzeugte und aus dem Heißwasserspeicher entnommene Wärmeenergie kann vorteilhaft dadurch weiter nutzbar gemacht werden, daß die aus dem Heißwasserspeicher entnommene wärmetragende Flüssigkeit in einem Dampferzeuger (zumindest teilweise) verdampft wird. Einem solchen Dampferzeuger kann beispielsweise ein Kondensator zum Kondensieren des Dampfs nachgeschaltet sein, wobei zwischen dem Dampferzeuger und dem Kondensator in an sich bekannter Weise eine Dampfturbine mit einem Generator zur Stromerzeugung angeordnet ist. Aus dem Destillat des Kondensators kann mittels einer Trinkwasseraufbereitungsanlage zusätzlich Trinkwasser erzeugt werden.

Beim Einsatz der erfindungsgemäßen Anlage in küstennahen Gebieten kann mit der aus dem Heißwasserspeicher entnommenen wärmetragenden Flüssigkeit auch direkt eine Meerwasserentsalzungsanlage betrieben werden. Vorteilhafterweise wird eine Meerwasserentsalzungsanlage jedoch zusätzlich zur Stromerzeugung installiert, wobei sie dem Dampferzeuger nachgeschaltet wird.

Zum mechanischen Schutz der erfindungsgemäßen Anlage, besonders bei deren Einsatz in Meeren, ist es vorteilhaft, wenn die Anlage oder zumindest der Heißwasserspeicher mit einer Schicht von Oberflächenwasser bedeckt ist, die einen Schutz gegen Windeinflüsse aller Art bietet. Insbesondere die Wellenausbildung an der Meeresoberfläche bei Stürmen beschränkt sich dann auf die über der erfindungsgemäßen Anlage liegende Schicht von Oberflächenwasser; eine Beschädigung der Anlage ist auch dann nicht zu befürchten, wenn der Heißwasserspeicher und gegebenenfalls der Warmwasserrücklaufspeicher mit membranartig beweglichen Wänden ausgestattet sind. Auch die an der Oberseite des Heißwasserspeichers befindliche transparente Wärmedämmung wird so wirkungsvoll geschützt.

Für den großtechnischen Einsatz der Erfindung ist es zweckmäßig, mehrere Heißwasserspeicher in Modulbauweise nebeneinander anzuordnen und über eine Sammelleitung zur Entnahme der wärmetragenden Flüssigkeit zu verbinden. Besondere Vorteile ergeben sich hierbei, wenn die Sammelleitung als Dampferzeuger ausgebildet ist, so daß der modular aufgebauten Anlage zentral Prozeßdampf entnommen werden kann.

Bei größeren Anlagen kann ein Mehrdruckprozeß wirtschaftliche Vorteile bieten. Hierbei wird die Sole nach Verlassen der ersten Verdampfungsstufe weiteren Verdampfungsstufen zugeführt und erfährt hierbei eine stärkere Abkühlung als beim Eindruckprozeß. Auf diese Weise kann die Enthalpie des Dampfes der ersten Stufe und damit der Prozeßwirkungsgrad erhöht werden.

Verschiedene Ausführungsbeispiele der Erfindung werden im folgenden anhand der beigefügten Zeichnungen näher erläutert und beschrieben. Es zeigen:
- Figur 1: ein Fließbild einer erfindungsgemäßen Anlage mit offenem Kreislauf zur Erzeugung von Strom und Destillat;
- Figur 2: ein Fließbild einer Anlage nach Figur 1, mit zusätzlicher Meerwasserentsalzungsanlage;
- Figur 3: ein Fließbild einer erfindungsgemäßen Anlage mit geschlossenen Kreisläufen;
- Figur 4: eine Seitenansicht einer erfindungsgemäßen Anlage mit offenem Kreislauf zur Erzeugung von Strom und Destillat;
- Figur 5: einen Schnitt durch einen Heißwasserspeicher mit Warmwasserrücklaufspeicher;
- Figur 6: einen Schnitt durch einen Heißwasserspeicher mit geteiltem Warmwasserrücklaufspeicher;
- Figur 7: einen Schnitt durch einen Heißwasserspeicher mit linsenförmigem oberem Warmwasserrücklaufspeicher;
- Figur 8: eine Draufsicht auf eine in Modulbauweise zusammengesetzte erfindungsgemäße Anlage;
- Figur 9: einen Schnitt durch die Anlage aus Figur 8;
- Figur 10: ein Fließbild einer erfindungsgemäßen Anlage gemäß einem weiteren Ausführungsbeispiel.

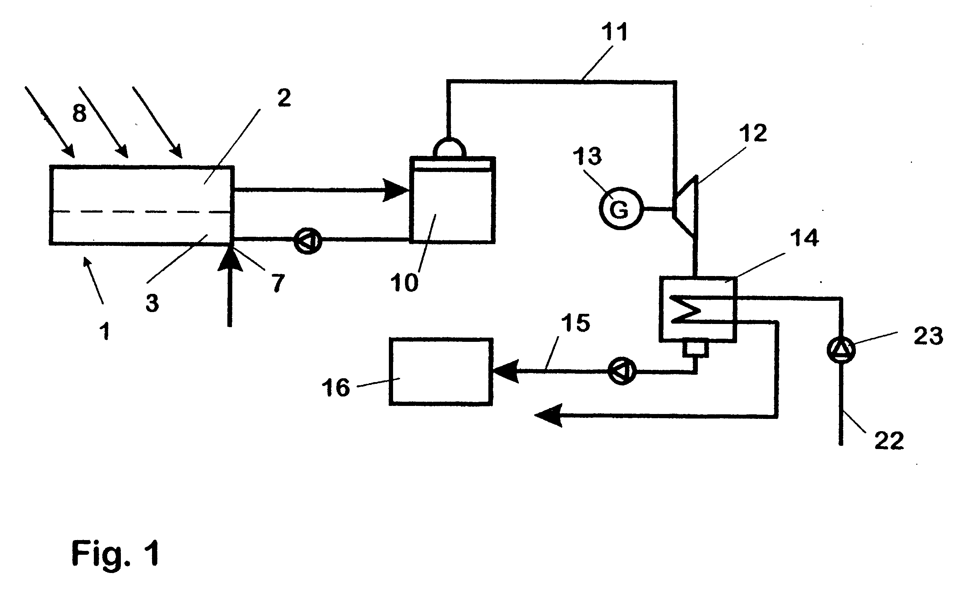

In Figur 1 ist eine Anlage zur solarthermischen Energiegewinnung im Fließbild dargestellt, welche in einem offenen Prozeß Strom und Trinkwasser erzeugt. Die Sonnenstrahlung 8, die auf ein Modul 1 mit Heißwasserspeicher 2 und Warmwasserrücklaufspeicher 3 auftrifft, wird im Heißwasserspeicher 2 in Wärme umgewandelt, so daß dieser heißes Wasser von bis zu ca. 100° C als wärmetragende Flüssigkeit enthält. Dieses wird dem Heißwasserspeicher 2 entnommen und einem Dampferzeuger 10 zugeführt, wo ein Teil des Heißwasserstroms aufgrund des dort herrschenden Unterdrucks verdampft. Der restliche, abgekühlte Wasserstrom gelangt in den Warmwasserrücklaufspeicher 3 zurück, wobei die als Dampf aus dem Kreislauf entnommene Wassermenge über einen Zusatzwassereinlaß 7 ersetzt wird. Der Warmwasserrücklaufspeicher 3 ist mit dem Heißwasserspeicher 2 verbunden, so daß sich ein Kreislauf der wärmetragenden Flüssigkeit einstellt.

Der im Dampferzeuger 10 produzierte Dampf wird über eine Dampfleitung 11 zu einem Kondensator 14 geleitet, wo er zu Destillat 15 kondensiert. Der Kondensator 14 wird mit Kühlwasser aus tiefen Gewässerschichten durchströmt, wofür eine Kühlwasseransaugleitung 22 und eine Kühlwasserpumpe 23 dienen. Dieses Kühlwasser sollte möglichst kalt sein, um ein hohes Enthalpiegefälle zu erzielen. Zwischen dem Dampferzeuger 10 und dem Kondensator 14 ist eine Dampfturbine 12 angeordnet, die einen Generator 13 zur Stromerzeugung antreibt.

Das im Kondensator 14 hergestellte Destillat 15 wird zu einer Trinkwasseraufbereitungsanlage 16 geleitet, um als Nebenprodukt der Stromerzeugung gereinigtes Trinkwasser bereitzustellen. Soll ausschließlich Trinkwasser erzeugt werden, kann auf Turbine und Generator verzichtet werden. Bei Installation mehrerer Anlagen könnte eine Anlage mit Dampfturbine 12 und Generator 13 zur Erzeugung des elektrischen Eigenbedarfs ausgeführt werden.

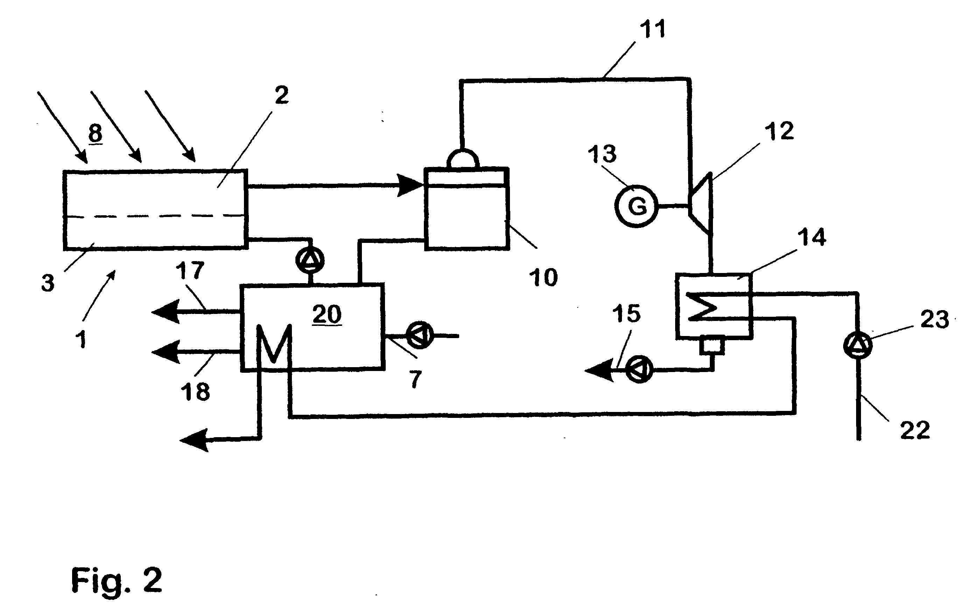

Das in Figur 2 gezeigte Ausführungsbeispiel unterscheidet sich von der in Figur 1 gezeigten Anlage dadurch, daß zusätzlich eine Meerwasserentsalzungsanlage 20 betrieben wird. Die Energie zum Betrieb dieser Meerwasserentsalzungsanlage 20 wird dem aus dem Dampferzeuger 10 in den Warmwasserrücklaufspeicher 3 zurückfließenden Warmwasserstrom entnommen. Die Meerwasserentsalzungsanlage 20 trennt Meerwasser, das über einen Zusatzwassereinlaß 7 zugeführt wird, in bekannter Weise in Trinkwasser 17 und eine konzentrierte Salzlösung 18 auf. Als Kühlwasser, welches hierzu benötigt wird, dient das aus dem Kondensator 14 zurückfließende kalte Wasser aus tiefen Gewässerschichten.

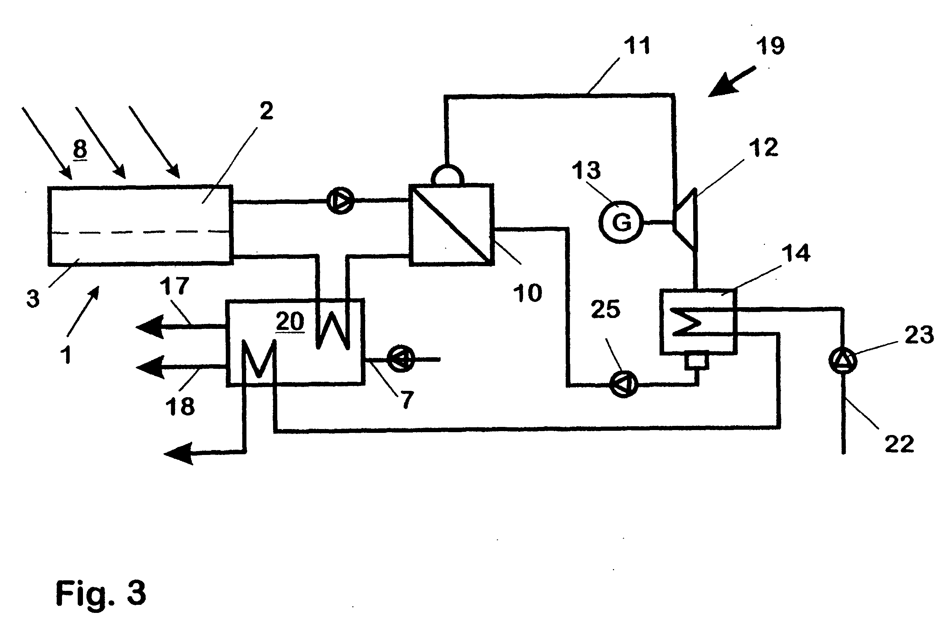

Das Ausführungsbeispiel, das in Figur 3 gezeigt ist, unterscheidet sich von den vorhergehenden Ausführungsbeispielen dadurch, daß ein geschlossener Sekundärkreislauf 19, dessen Wasser Deionat-Qualität aufweist, vorgesehen ist. Der Dampferzeuger 10 arbeitet deshalb mit einem Wärmetauscher, wodurch auch der Primärkreislauf der wärmetragenden Flüssigkeit geschlossen ist. Das im Kondensator 14 kondensierte Wasser wird über eine Speisewasserpumpe 25 in den Dampferzeuger 10 zurückgeführt. Dementsprechend fällt hier kein Destillat 15 an, welches zur Erzeugung von Trinkwasser dienen könnte. Die Erzeugung von Trinkwasser erfolgt ausschließlich über die Meerwasserentsalzungsanlage 20.

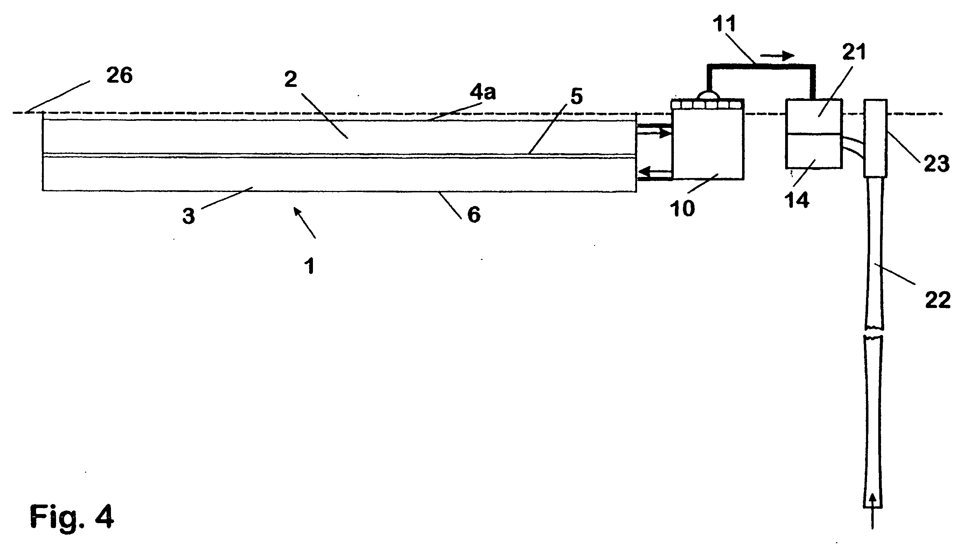

Figur 4 zeigt ein Ausführungsbeispiel der erfindungsgemäßen Anlage im Schnitt. Ein großflächiger Heißwasserspeicher 2 ist mit einer Absorberschicht 5 versehen und befindet sich schwimmend an der Oberfläche 26 eines Gewässers. Die Oberseite des Heißwasserspeichers 2 ist mit einer transparenten Wärmedämmung 4a versehen; an dessen Unterseite schließt sich ein Warmwasserrücklaufspeicher 3 an, dessen Wand 6 gegen das umgebende Wasser ebenfalls wärmegedämmt ist. Das aus dem Heißwasserspeicher 2 als wärmetragende Flüssigkeit entnommene heiße Wasser wird in einen Dampferzeuger 10 geleitet und fließt von dort wieder zurück in den Warmwasserrücklaufspeicher 3. Der im Dampferzeuger 10 erzeugte Dampf gelangt über die Dampfleitung 11 in eine Turbogruppe 21 und anschließend in einen Kondensator 14, welcher über eine Kühlwasseransaugleitung 22 und eine Kühlwasserpumpe 23 mit möglichst kaltem Wasser aus tiefen Gewässerschichten beaufschlagt wird.

In diesem Ausführungsbeispiel sind sowohl das Modul 1 mit dem Heißwasserspeicher 2, als auch der Dampferzeuger 10, die Turbogruppe 21 und der Kondensator 14 schwimmend ausgebildet.

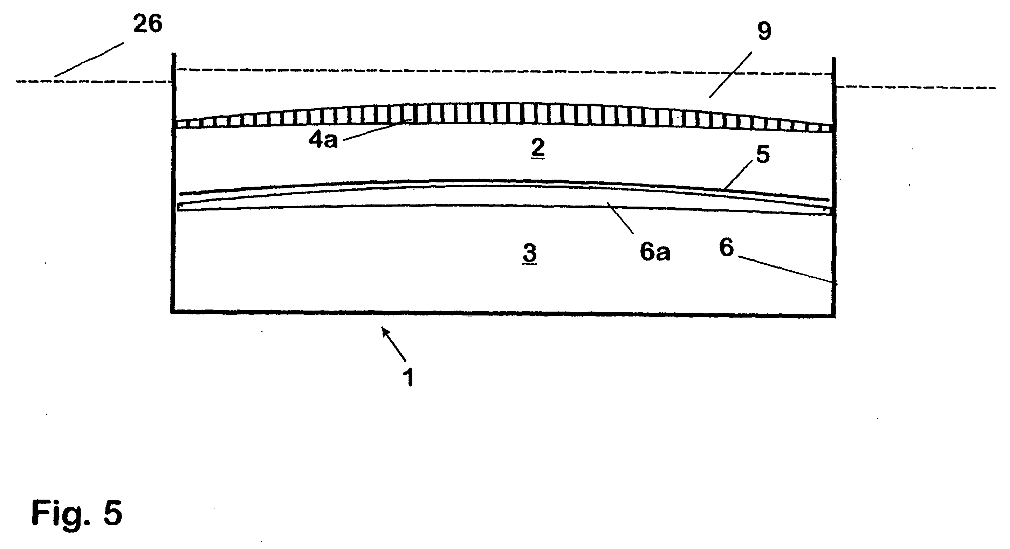

Figur 5 zeigt einen Schnitt durch ein Modul 1. Der Heißwasserspeicher 2 mit seiner obenliegenden transparenten Wärmedämmung 4a ist mit Oberflächenwasser 9 bedeckt. Innerhalb des Heißwasserspeichers 2 befindet sich die Absorberschicht 5. Unterhalb des Heißwasserspeichers 2 ist der Warmwasserrücklaufspeicher 3 angeordnet, der über eine Wärmedämmung 6a vom Heißwasserspeicher 2 getrennt ist. Die Wand 6, die das gesamte Modul 1 umschließt, ist membranartig beweglich ausgebildet.

Durch die transparente Wärmedämmung 4a dringt die Sonnenstrahlung 8 in den Heißwasserspeicher 2. Ein Teil der Sonnenstrahlung 8 wird beim Durchgang durch das Wasser absorbiert und erwärmt dieses geringfügig. Der Rest der Sonnenstrahlung 8 trifft auf die Absorberschicht 5 und erhitzt diese, um ihrerseits das umgebende Wasser auf die gewünschte Maximaltemperatur aufzuheizen. Der vor einer Verdampfung maximal erreichbare Dampfdruck wird durch den am höchsten Punkt des Heißwasserspeichers 2 herrschenden Wasserdruck bestimmt.

Bei Erreichen der Maximaltemperatur des Heißwasserspeichers 2 werden die Absorberschicht 5 und die Wärmedämmung 6a nach unten bewegt. Hierdurch gelangt Wasser aus dem Warmwasserrücklaufspeicher 3 in die Umgebung der Absorberschicht 5, um anschließend aufgeheizt zu werden und das auf Maximaltemperatur aufgeheizte Wasser im Heißwasserspeicher 2 zu ergänzen. Bei Entnahme von heißem Wasser aus dem Heißwasserspeicher 2 außerhalb der Sonnenscheindauer kann die Wärmedämmung 6a wieder nach oben bewegt werden, so daß kein Wasser aus dem Warmwasserrücklaufspeicher 3 in den Heißwasserspeicher 2 nachfließen kann - die Temperatur im Heißwasserspeicher 2 bleibt konstant. Die bewegliche Wärmedämmung 6a ermöglicht also eine Volumenänderung des Heißwasserspeichers 2 und des Warmwasserrücklaufspeichers 3, die je nach Sonneneinstrahlung und Betriebssituation notwendig werden kann.

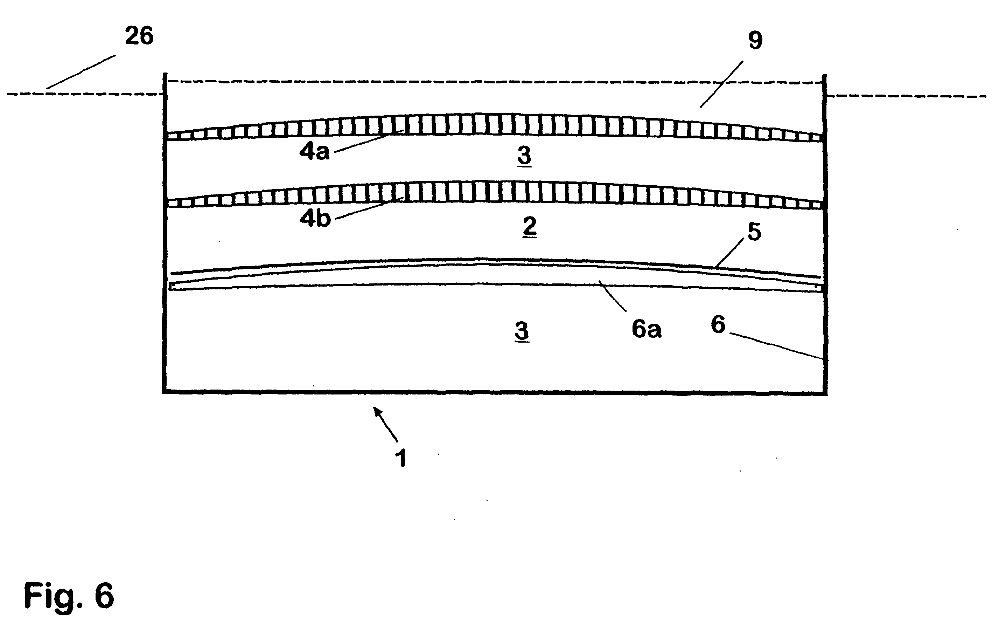

Das in Figur 6 dargestellte Modul 1 entspricht im wesentlichen dem aus Figur 5, jedoch ist hier zur Verringerung von Wärmeverlusten der Warmwasserrücklaufspeicher 3 geteilt, so daß sich jeweils ein Teil des Warmwasserrücklaufspeichers 3 oberhalb und unterhalb des Heißwasserspeichers 2 befindet. Zwischen dem Warmwasserrücklaufspeicher 3 und dem Heißwasserspeicher 2 ist eine weitere transparente Wärmedämmung 4b angeordnet, durch welche die Sonnenstrahlung 8 bis zur Absorberschicht 5 vordringen kann.

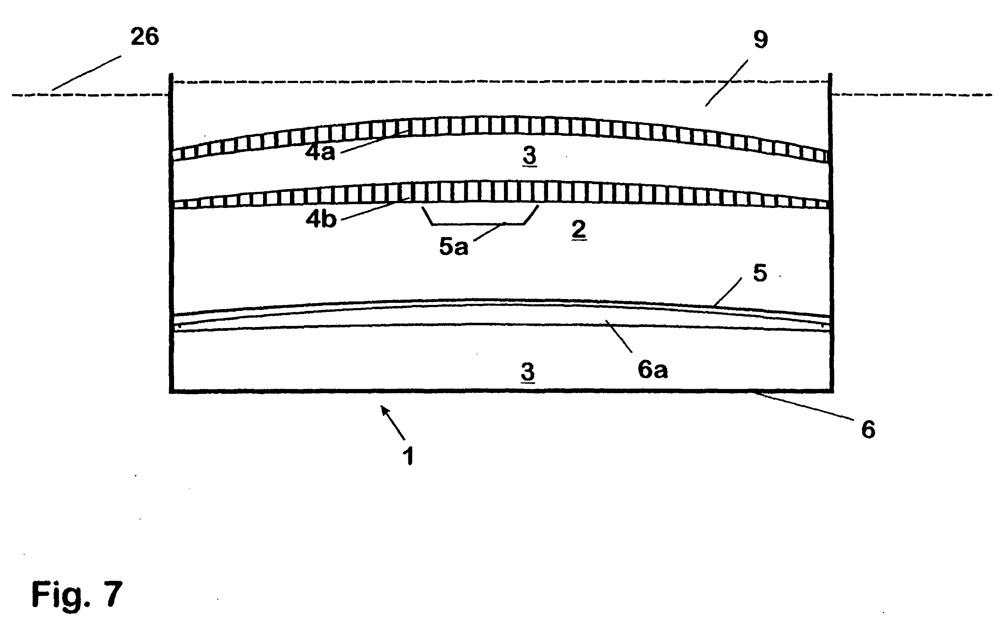

Die in Figur 7 gezeigte Ausbildung des Moduls 1 entspricht dem aus Figur 6, wobei allerdings der Querschnitt des obenliegenden Teils des Warmwasserrücklaufspeichers 3 eine Form aufweist, die der einer konvexen Linse entspricht. Im Heißwasserspeicher 2 ist ein zusätzlicher oberer Absorber 5a angeordnet, auf den ein Großteil der einfallenden Sonnenstrahlung 8 durch den linsenförmigen, oberen Warmwasserrücklaufspeicher 3 konzentriert wird. Der nicht auf den oberen Absorber 5a treffende Teil der eintretenden Sonnenstrahlung 8 wird von der Absorberschicht 5 in Wärme umgewandelt.

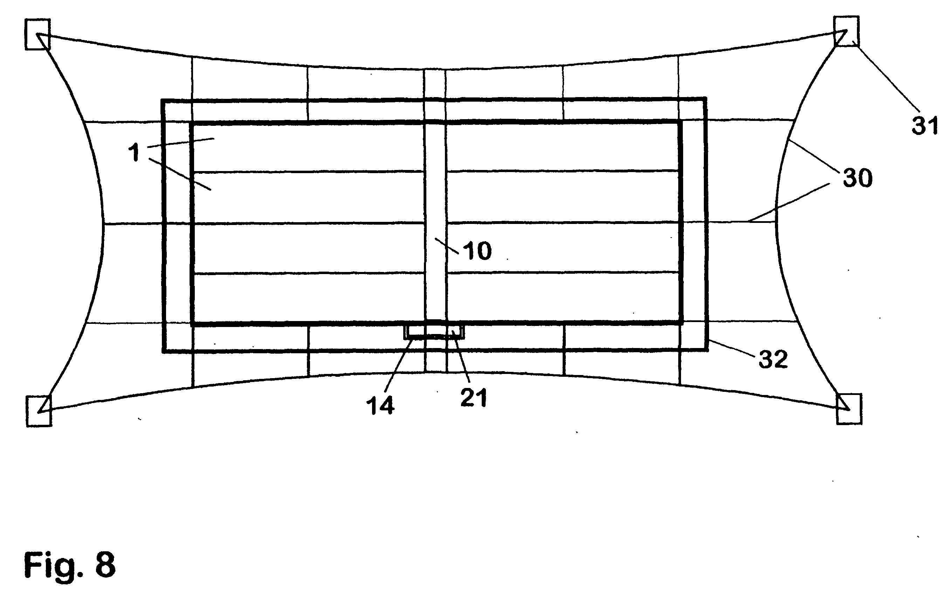

Figur 8 zeigt die Draufsicht auf eine erfindungsgemäße Anlage zum Einsatz in großtechnischem Maßstab. Mehrere flächig ausgebildete Module 1 mit Heißwasserspeichern 2 sind nebeneinander angeordnet und grenzen an eine mittig liegende Sammelleitung zur Entnahme der wärmetragenden Flüssigkeit an. Diese Sammelleitung ist als Dampferzeuger 10 ausgebildet, was separate Leitungen für den Pirmärkreislauf erübrigt. Der im Dampferzeuger 10 hergestellte Dampf gelangt über eine seitlich angeordnete Turbogruppe 21 in den Kondensator 14.

Die gesamte hier dargestellte Anlage kann vorzugsweise im Meer plaziert werden. Zum mechanischen Schutz der Module 1 sind diese dann ringsum von einem Wellenschutz 32 umgeben. Sie sind über die Spannseile 30 mit Verankerungen 31 verbunden, jedoch gleichzeitig mit membranartig beweglichen Wänden versehen, so daß die gesamte Anlage leichte Wasserbewegungen mitmachen kann.

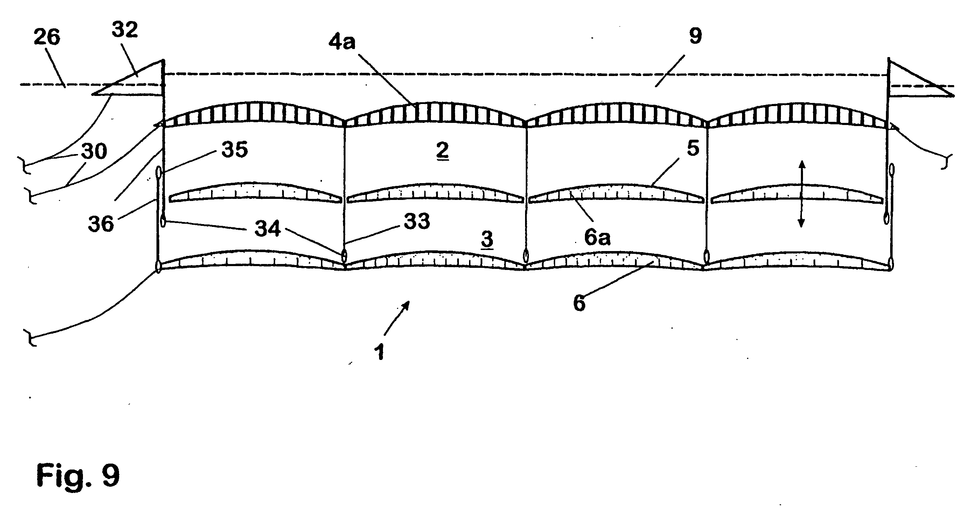

Figur 9 zeigt die Anlage aus Figur 8 im Schnitt, wobei vier nebeneinanderliegende Module 1 erkennbar sind. Diese bestehen jeweils aus einem Heißwasserspeicher 2, einem darunter angeordneten Warmwasserrücklaufspeicher 3, einer zwischenliegenden Wärmedämmung 6a, auf welcher die Absorberschicht 5 angebracht ist, sowie einer obenliegenden transparenten Wärmedämmung 4a, die von Oberflächenwasser 9 überdeckt ist. Die Wand 6, die den Warmwasserrücklaufspeicher 3 vom umgebenden Wasser trennt, ist ebenfalls mit einer Wärmedämmung versehen.

Um dem Auftrieb der transparenten Wärmedämmung 4a entgegenzuwirken, ist diese mit Spanngewichten 34 versehen, welche im einfachsten Fall sandgefüllte Schläuche sein können, wobei diese Spanngewichte 34 folienartige Zwischenwände 33 zur Trennung der einzelnen Module 1 aufspannen. Die Spannseile 30 halten die Anlage an Ort und Stelle und sorgen für eine Vorspannung der transparenten Wärmedämmung 4a, wobei der Wellenschutz 32 mechanische Beschädigungen der Anlage bei Sturm verhindert.

Die membranartige Außenwand 36 der gezeigten Anlage ist zweiteilig ausgebildet, wobei der untere Teil durch Auftriebskörper 35 und der obere Teil durch Spanngewichte 34 unter Spannung gehalten wird. Diese Zweiteilung der Außenwand 36 ermöglicht eine Gesamtvolumenänderung innerhalb der einzelnen Module 1, wobei auch die Wärmedämmungen 6a zwischen den Heißwasserspeichern 2 und den Warmwasserrücklaufspeichern 3 verschiebbar ausgebildet sind, so daß sowohl die Heißwasserspeicher 2 als auch die Warmwasserrücklaufspeicher 3, je nach Sonneneinstrahlung und entnommener Nutzwärme, unabhängig voneinander verkleinert oder vergrößert werden können.

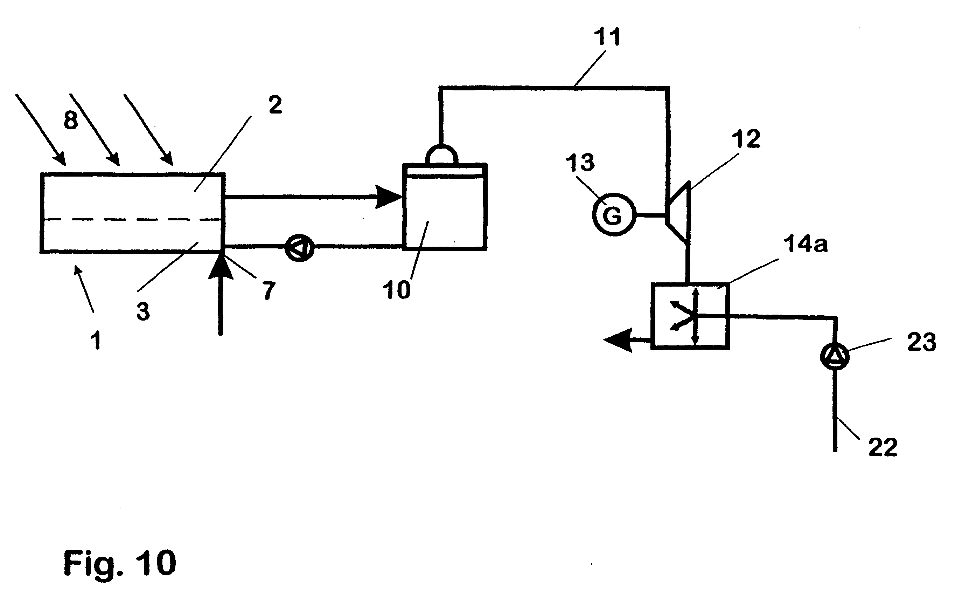

Figur 10 schließlich zeigt nochmals ein Fließbild einer erfindungsgemäßen Anlage mit offenem Kreislauf zur Erzeugung von elektrischem Strom. Der Unterschied zu der in Figur 1 gezeigten Anlage besteht darin, daß im Kondensator 14 kein Destillat 15 erzeugt wird, sondern daß der Kondensator 14 als Einspritzkondensator 14a ausgebildet ist, welcher eine effizientere Abkühlung des Dampfs ermöglicht, so daß das Enthalpiegefälle und somit der Wirkungsgrad der Anlage verbessert ist.

### Zusammenstellung der Bezugszeichen

- 1: Modul
- 2: Heißwasserspeicher
- 3: Warmwasserrücklaufspeicher
- 4a, 4b: transparente Wärmedämmung
- 5: Absorberschicht
- 5a: oberer Absorber
- 6: Wand
- 6a: Wärmedämmung
- 7: Zusatzwassereinlaß
- 8: Sonnenstrahlung
- 9: Oberflächenwasser
- 10: Dampferzeuger
- 11: Dampfleitung
- 12: Dampfturbine
- 13: Generator
- 14: Kondensator
- 14a: Einspritzkondensator
- 15: Destillat
- 16: Trinkwasseraufbereitungsanlage
- 17: Trinkwasser
- 18: konzentrierte Salzlösung
- 19: Sekundärkreislauf
- 20: Meerwasserentsalzungsanlage
- 21: Turbogruppe
- 22: Kühlwasseransaugleitung
- 23: Kühlwasserpumpe
- 25: Speisewasserpumpe
- 26: Oberfläche
- 30: Spannseil
- 31: Verankerung
- 32: Wellenschutz
- 33: Zwischenwand
- 34: Spanngewicht
- 35: Auftriebskörper
- 36: Außenwand

## Patentansprüche

1. Anlage zur solarthermischen Energiegewinnung, mit einer Absorberschicht (5) zur Umwandlung von Sonnenlicht (8) in thermische Energie sowie mit einer transparenten, wärmetragenden Flüssigkeit zum Transport der in der Absorberschicht (5) erzeugten Wärme zur weiteren Nutzung, wobei die Absorberschicht (5) innerhalb der wärmetragenden Flüssigkeit angeordnet ist, und wobei die Absorberschicht (5) innerhalb eines Heißwasserspeichers (2) angeordnet ist, der zur Speicherung der von der Absorberschicht (5) abgegebenen thermischen Energie dient und dem heißes Wasser als wärmetragende Flüssigkeit entnehmbar ist, wobei der Heißwasserspeicher (2) zumindest an seiner Oberseite mit einer transparenten Wärmedämmung (4a) versehen ist, **dadurch gekennzeichnet, daß** der Heißwasserspeicher (2) unterhalb der Oberfläche (26) eines Gewässers schwimmend ausgebildet ist.

2. Anlage nach Anspruch 1, **dadurch gekennzeichnet, daß** der Heißwasserspeicher (2) volumenveränderlich ausgebildet ist.

3. Anlage nach Anspruch 2, **dadurch gekennzeichnet, daß** der Heißwasserspeicher (2) membranartig bewegliche Wände (6) aufweist.

4. Anlage nach einem der Ansprüche 1 bis 3, **dadurch gekennzeichnet, daß** ein Warmwasserrücklaufspeicher (3) zur Aufnahme der aus dem Heißwasserspeicher (2) entnommenen, durch einen Verwertungsprozeß abgekühlten und in den Heißwasserspeicher (2) zurückzuführenden, wärmetragenden Flüssigkeit vorgesehen ist, welcher an den Heißwasserspeicher (2) angrenzend angeordnet ist.

5. Anlage nach Anspruch 4, **dadurch gekennzeichnet, daß** der Heißwasserspeicher (2) und der Warmwasserrücklaufspeicher (3) zu einem Modul (1) mit gemeinsamen Außenwänden (6) zusammengefaßt sind, wobei zwischen dem Heißwasserspeicher (2) und dem Warmwasserrücklaufspeicher (3) eine verschiebbare Trennwand vorgesehen ist.

6. Anlage nach Anspruch 5, **dadurch gekennzeichnet, daß** die verschiebbare Trennwand mit einer Wärmedämmung (6a) versehen ist.

7. Anlage nach Anspruch 6, **dadurch gekennzeichnet, daß** die Absorberschicht (5) und die Wärmedämmung (6a) eine Einheit bilden, deren Dichte so eingestellt ist, daß sie geringfügig über der Dichte liegt, die der Inhalt des Heißwasserspeichers (2) bei der gewünschten Endtemperatur besitzt.

8. Anlage nach einem der Ansprüche 4 bis 7, **dadurch gekennzeichnet, daß** der Heißwasserspeicher (2) zumindest an seiner Oberseite und an seiner Unterseite in den Warmwasserrücklaufspeicher (3) eingebettet ist.

9. Anlage nach Anspruch 8, **dadurch gekennzeichnet, daß** der oberhalb des Heißwasserspeichers (2) angeordnete Teil des Warmwasserrücklaufspeichers (3), zur Konzentrierung des einfallenden Sonnenlichts (8) auf einen im Heißwasserspeicher (2) angeordneten oberen Absorber (5a), in Form einer konvexen Linse ausgebildet ist.

10. Anlage nach einem der Ansprüche 1 bis 9, **dadurch gekennzeichnet, daß**, zur Konzentrierung des einfallenden Sonnenlichts (8) auf einen im Heißwasserspeicher (2) angeordneten oberen Absorber (5a), im Heißwasserspeicher (2) Folienspiegel vorgesehen sind.

11. Anlage nach einem der Ansprüche 4 bis 10, **dadurch gekennzeichnet, daß** der Warmwasserrücklaufspeicher (3) membranartig bewegliche Wände (6) aufweist.

12. Anlage nach einem der Ansprüche 1 bis 11, **dadurch gekennzeichnet, daß** ein Dampferzeuger (10) zur zumindest teilweisen Verdampfung der aus dem Heißwasserspeicher (2) entnommenen wärmetragenden Flüssigkeit vorgesehen ist.

13. Anlage nach Anspruch 12, **dadurch gekennzeichnet, daß** dem Dampferzeuger (10) eine Dampfturbine (12) mit einem Generator (13) zur Stromerzeugung sowie ein Kondensator (14, 14a) zum Kondensieren des Dampfes nachgeschaltet ist.

14. Anlage nach Anspruch 13, **dadurch gekennzeichnet, daß** eine Trinkwasseraufbereitungsanlage (16) zur Erzeugung von Trinkwasser (17) aus dem Destillat (15) des Kondensators (14) vorgesehen ist.

15. Anlage nach einem der Ansprüche 1 bis 14, **dadurch gekennzeichnet, daß** eine, mit der aus dem Heißwasserspeicher (2) entnommenen wärmetragenden Flüssigkeit betreibbare, Meerwasserentsalzungsanlage (20) vorgesehen ist.

16. Anlage nach den Ansprüchen 12 und 15, **dadurch gekennzeichnet, daß** die Meerwasserentsalzungsanlage (20) dem Dampferzeuger (10) nachgeschaltet ist.

17. Anlage nach einem der Ansprüche 1 bis 16, **dadurch gekennzeichnet, daß** die Anlage mit einer Schicht von Oberflächenwasser (9) bedeckt ist, die einen Schutz gegen Windeinflüsse aller Art bietet.

18. Anlage nach einem der Ansprüche 1 bis 17, **dadurch gekennzeichnet, daß** mehrere Heißwasserspeicher (2) in Modulbauweise nebeneinander angeordnet und über eine Sammelleitung zur Entnahme der wärmetragenden Flüssigkeit miteinander verbunden sind.

19. Anlage nach Anspruch 18, **dadurch gekennzeichnet, daß** die Sammelleitung als Dampferzeuger (10) ausgebildet ist.

## Claims

1. Installation for producing solar thermal energy, with an absorber layer (5) for converting sunlight (8) into thermal energy as well as with a transparent, heat-carrying fluid to transport the heat produced in the absorber layer (5) for further utilisation, wherein the absorber layer (5) is arranged within the heat-carrying fluid, and wherein the absorber layer (5) is arranged within a hot water storage device (2) serving for storing the thermal energy given off by the absorber layer (5) and from which hot water is removable as a heat-carrying liquid, wherein the hot water storage device (2) is provided on at least its upper side with a transparent heat-damming means (4),
**characterised in that** the hot water storage device (2) is floatingly formed beneath the surface (26) of a body of water.

2. Installation according to claim 1, **characterised in that** the hot water storage device (2) is formed such that its volume is variable.

3. Installation according to claim 2, **characterised in that** the hot water storage device (2) has walls (6) displaceable in a membrane-like manner.

4. Installation according to one of claims 1 to 3, **characterised in that** arranged adjacent the hot water storage medium (2) there is a warm water return storage device (3) for accommodating the heat-carrying liquid taken from, and to be led back into, the hot water storage device (2) after cooling in a utilisation process.

5. Installation according to claim 4, **characterised in that** the hot water storage device (2) and the warm water return storage device (3) are united together into one module (1) with common external walls (6), wherein a displaceable partition wall is provided between the hot water storage device (2) and the warm water return storage device (3).

6. Installation according to claim 5, **characterised in that** the displaceable partition wall is provided with heat insulation (6a).

7. Installation according to claim 6, **characterised in that** the absorber layer (5) and the heat insulation (6a) form a single unit, the thickness of which is so adjusted that it is slightly in excess of the thickness of the content of the hot water storage device (2) at the desired final temperature.

8. Installation according to one of claims 4 to 7, **characterised in that** the hot water storage device (2) is embedded on at least at its upper and lower sides in the warm water return storage device (3).

9. Installation according to claim 8, **characterised in that** in order to concentrate the sunlight (8) falling on an upper absorber (5a) arranged in the hot water storage device (2), the part of the warm water return storage device (3) arranged above the hot water storage device (2) is formed in the form of a convex lens.

10. Installation according to one of claims 1 to 9, **characterised in that**, in order to concentrate the sunlight (8) falling on the upper absorber (5a) arranged in the hot water storage medium (2), reflecting foils are arranged in the hot water storage device (2).

11. Installation according to one of claims 4 to 10, **characterised in that** the warm water return storage device (3) has walls (6) displaceable in a membrane-like manner.

12. Installation according to one of claims 1 to 11, **characterised in that** a steam generator (10) is provided for the at least partial evaporation of the heat-carrying liquid taken from the hot water storage device (2).

13. Installation according to claim 12, **characterised in that** a steam turbine (12) with a generator (13) for producing current as well as a condenser (14, 14a) for condensing the steam are connected downstream of the steam generator (10).

14. Installation according to claim 13, **characterised in that** drinking water preparation plant (16) is provided for producing drinking water (17) from the distillate (15) of the condenser (14).

15. Installation according to one of claims 1 to 14, **characterised in that** a sea water desalination plant (20) operable by the heat-carrying liquid taken from the hot water storage device (2) is provided.

16. Installation according to one of claims 12 and 15, **characterised in that** the sea water desalination plant (2) is connected downstream of the steam generator (10).

17. Installation according to one of claims 1 to 16, **characterised in that** the plant is covered with a layer of surface water (9) which affords protection against all types of wind influences.

18. Installation according to one of claims 1 to 17, **characterised in that** several hot water storage devices (2) are arranged in a juxtaposed modular construction and are connected together via a collector pipe for removing the heat-carrying liquid.

19. Installation according to claim 18, **characterised in that** the collector pipe is formed as a steam generator (10).

## Revendications

1. Installation pour la production d'énergie thermique solaire, comportant une couche d'absorbeur (5) pour la conversion de la lumière solaire (8) en énergie thermique, ainsi qu'un liquide caloporteur transparent pour le transport de la chaleur produite dans la couche d'absorbeur (5) pour une utilisation ultérieure, la couche d'absorbeur (5) étant disposée à l'intérieur du liquide caloporteur, et la couche d'absorbeur (5) étant disposée à l'intérieur d'un chauffe-eau à accumulation (2), qui sert à accumuler l'énergie thermique cédée par la couche d'absorbeur (5) et dont peut être soutirée de l'eau chaude comme liquide caloporteur, le chauffe-eau à accumulation (2) étant muni d'un calorifugeage transparent (4a) au moins sur son côté supérieur, **caractérisée en ce que** le chauffe-eau à accumulation (2) est réalisé de manière flottante au-dessous de la surface (26) de l'eau.

2. Installation suivant la revendication 1, **caractérisée en ce que** le chauffe-eau à accumulation (2) est réalisé avec un volume variable.

3. Installation suivant la revendication 2, **caractérisée en ce que** le chauffe-eau à accumulation (2) présente des parois mobiles (6) à la manière de membranes.

4. Installation suivant l'une des revendications 1 à 3, **caractérisée en ce qu'**un ballon de retour d'eau chaude (3) est prévu pour recevoir le liquide caloporteur soutiré du chauffe-eau à accumulation (2), refroidi par un processus de récupération et à renvoyer dans le chauffe-eau à accumulation (2), et est disposé à proximité du chauffe-eau à accumulation (2).

5. Installation suivant la revendication 4, **caractérisée en ce que** le chauffe-eau à accumulation (2) et le ballon de retour d'eau chaude (3) sont regroupés en un module (1) ayant des parois extérieures communes (6), une cloison mobile étant prévue entre le chauffe-eau à accumulation (2) et le ballon de retour d'eau chaude (3).

6. Installation suivant la revendication 5, **caractérisée en ce que** la cloison mobile est munie d'un calorifugeage (6a).

7. Installation suivant la revendication 6, **caractérisée en ce que** la couche d'absorbeur (5) et le calorifugeage (6a) forment une unité dont la masse volumique est réglée de sorte qu'elle est légèrement supérieure à la masse volumique que présente le contenu du chauffe-eau à accumulation (2) à la température finale souhaitée.

8. Installation suivant l'une des revendications 4 à 7, **caractérisée en ce que** le chauffe-eau à accumulation (2) est noyé dans le ballon de retour d'eau chaude (3), au moins sur son côté supérieur et sur son côté inférieur.

9. Installation suivant la revendication 8, **caractérisée en ce que** la partie du ballon de retour d'eau chaude (3) disposée au-dessus du chauffe-eau à accumulation (2) est réalisée sous forme d'une lentille convexe pour concentrer la lumière solaire incidente (8) sur un absorbeur supérieur (5a) disposé dans le chauffe-eau à accumulation (2).

10. Installation suivant l'une des revendications 1 à 9, **caractérisée en ce que** des miroirs sont prévus dans le chauffe-eau à accumulation (2) pour concentrer la lumière solaire incidente (8) sur un absorbeur supérieur (5a) disposé dans le chauffe-eau à accumulation (2).

11. Installation suivant l'une des revendications 4 à 10, **caractérisée en ce que** le ballon de retour d'eau chaude (3) présente des parois mobiles (6) à la manière de membranes.

12. Installation suivant l'une des revendications 1 à 11, **caractérisée en ce qu'**un générateur de vapeur (10) est prévu pour la vaporisation au moins partielle du liquide caloporteur soutiré du chauffe-eau à accumulation (2).

13. Installation suivant la revendication 12, **caractérisée en ce qu'**une turbine à vapeur (12) avec un générateur (13) pour la production de courant, ainsi qu'un condenseur (14, 14a) pour la condensation de la vapeur, sont montés en aval du générateur de vapeur (10).

14. Installation suivant la revendication 13, **caractérisée en ce qu'**une installation de traitement d'eau potable (16) est prévue pour produire de l'eau potable (17) à partir du distillat (15) du condenseur (14).

15. Installation suivant l'une des revendications 1 à 14, **caractérisée en ce qu'**il est prévu une installation de dessalement d'eau de mer (20), exploitable avec le liquide caloporteur soutiré du chauffe-eau à accumulation (2).

16. Installation suivant les revendications 12 et 15, **caractérisée en ce que** l'installation de dessalement d'eau de mer (20) est montée en aval du générateur de vapeur (10).

17. Installation suivant l'une des revendications 1 à 16, **caractérisée en ce que** l'installation est recouverte d'une couche d'eau de surface (9), qui offre une protection contre les influences du vent de toute sorte.

18. Installation suivant l'une des revendications 1 à 17, **caractérisée en ce que** plusieurs chauffe-eau à accumulation (2) sont juxtaposés en construction modulaire, et sont reliés entre eux par l'intermédiaire d'un collecteur pour le soutirage du liquide caloporteur.

19. Installation suivant la revendication 18, **caractérisée en ce que** le collecteur est réalisé en tant que générateur de vapeur (10).
